# EUROPEAN PATENT APPLICATION

(11) **EP 4 763 438 A1**
(43) Date of publication of application: **24.06.2026**
(21) Application number: 25224618.6
(22) Date of filing: 17.12.2025
(51) Int. Cl.: B25J 9/16

(54) **SYSTEM AND METHOD FOR AUTONOMOUS SUPPORT OF EXTRAVEHICULAR ACTIVITY OPERATIONS IN SPACE**

(30) Priority: 17.12.2024 US 202463735152 P
(71) Applicant: MacDonald, Dettwiler and Associates Inc., Brampton, Ontario L6Y 6K7 (CA)
(72) Inventor: Caldwell, Jack Austin, Brampton, L6Y 6K7 (CA); Arnold, Katherine, Brampton, L6Y 6K7 (CA); Sorocky, Michael Joseph, Brampton, L6Y 6K7 (CA); Watson, William, Brampton, L6Y 6K7 (CA); Langley, Christopher Stewart, Brampton, L6Y 6K7 (CA)
(74) Representative: Mewburn Ellis LLP

(57) **Abstract**

A system and method for autonomously supporting extravehicular activity ("EVA") on a spacecraft is provided. The system includes: a robotic arm for moving an EVA crew member on a robotic arm to and from a worksite; an autonomy processing device configured to: execute a collision avoidance module that detects a potential collision situation based on telemetry received from sensors of the robotic arm, wherein the collision avoidance module includes preconfigured collision models representing the robotic arm and structure of the spacecraft and an envelope model that covers the EVA crew member on the tip of the robotic arm; and execute an autonomous sensing of unexpected obstacles (ASUO) module during motion of the robotic arm that compares image data of a real world volume to the same volume in a modelled world and detects objects sensed in the real world volume that do not exist in the modelled world.

## Description

### Technical Field

The following relates generally to robotic systems, and more particularly to space robotics systems.

### Introduction

Space missions, such as those on space stations, require the performance of extravehicular activity ("EVA") that is supported by EVA crew members. Currently, such as on the International Space Station, all situation awareness and clearance monitoring for EVA support operations is done by either EVA crew or intravehicular activity ("IVA") crew based on camera views. This requires significant preplanning and human effort, which can complicate and distract from the performance of the actual EVA operation.

Accordingly, there is a need for an improved system and method for extravehicular activity (EVA) support operations that overcomes at least some of the disadvantages of existing systems and methods.

### Summary

An autonomous robotic system for supporting extravehicular activity ("EVA") on a spacecraft is provided. The system includes: a robotic arm for moving an EVA crew member on a tip of the robotic arm to and from an EVA worksite according to an EVA support task; an autonomy processing device configured to: execute a collision avoidance module that autonomously detects a potential collision situation (PCS) in real-time during motion of the robotic arm based on telemetry received from one or more sensors on or in an environment of the robotic arm, wherein the collision avoidance module includes a set of preconfigured collision models including collision models representing the robotic arm, an envelope model that covers the EVA crew member and their possible or likely range of motion on the tip of the robotic arm, and structure of the spacecraft; and execute an autonomous sensing of unexpected obstacles (ASUO) module during motion of the robotic arm that autonomously compares image data of a real world volume where the EVA crew member is about to be to the same volume in a modelled world and detects objects sensed in the real world volume that do not exist in the modelled world.

In an embodiment, the collision avoidance module executes a model-based collision avoidance algorithm.

In an embodiment, the collision avoidance module performs collision detection by comparing a current location and orientation of the robotic arm obtained from telemetry with a known and up-to-date model of the environment.

In an embodiment, the collision avoidance module checks a planned path of the robotic arm in the EVA support task for potential collisions between the robotic arm and itself and between the robotic arm and the environment using known three dimensional geometry of the spacecraft.

In an embodiment, the collision avoidance module uses telemetry on the current pose of an articulated structure on the spacecraft when detecting a potential collision situation between the robotic arm and the articulated structure.

In an embodiment, the articulated structure is an antenna or a solar array.

In an embodiment, the collision avoidance module computes forward kinematics on three dimensional models (3D) of the robotic arm and the environment, and then checks clearance between the 3D models to ensure adequate clearance is maintained.

In an embodiment, the real world volume is the EVA worksite.

In an embodiment, the autonomy processing device is configured to execute an executive runtime that outputs a command to a controller of the robotic arm for performing a contingency operation upon detection of a potential collision situation by the collision avoidance module, and the contingency operation is arresting motion or backing away to a predetermined location.

In an embodiment, the autonomy processing device configures the collision avoidance module prior to execution of the EVA support using topology information of the spacecraft and pose information including pose information of the robotic arm.

In an embodiment, the pose information further includes pose information of one or more articulated structures on the spacecraft.

In an embodiment, the autonomy processing device is configured to autonomously adjust a frame of resolution (FOR) of the robotic arm to a predetermined location for EVA positioning.

In an embodiment, the FOR adjustment is scripted in the EVA task executed by an executive runtime of the autonomous processing device.

In an embodiment, the autonomy processing device reconfigures the set of preconfigured models used by the collision avoidance module for the EVA support task by disabling a predetermined subset of the models.

In an embodiment, the predetermined subset of the models includes a model of the EVA crew member on the tip of the robotic arm.

In an embodiment, the predetermined subset of the models further includes a model of an end effector at the tip of the robotic arm and a model of a payload or interface to be worked on at the EVA worksite.

In an embodiment, the autonomy processing device is configured to autonomously disable and re-enable a predetermined subset of models used by the collision avoidance module during performance of the EVA support task.

In an embodiment, the image data includes a two-dimensional image. In an embodiment, the image data includes a three-dimensional image.

In an embodiment, the image data is captured by any one or more of a stereo camera, a lidar device, In an embodiment, a THz imaging device, a microbolometer device, a thermal imaging device, an event imaging device, a distributed or heterodyned range sensing device, or a millimeter wave radar device.

In an embodiment, the collision avoidance module: performs collision detection by comparing a current location and orientation of the robotic arm obtained from telemetry with a known and up-to-date model of the environment; and/or checks a planned path of the robotic arm in the EVA support task for potential collisions between the robotic arm and itself and between the robotic arm and the environment using known three dimensional geometry of the spacecraft; and/or computes forward kinematics on three dimensional models (3D) of the robotic arm and the environment, and then checks clearance between the 3D models to ensure adequate clearance is maintained.

A method is also provided. The method includes performing an EVA support operation using the system of any one of forgoing systems.

A method of performing an EVA support operation on a spacecraft is also provided. The method includes: moving, with a robotic arm, an EVA crew member on a tip of the robotic arm to and from an EVA worksite according to an EVA support task; executing, by an autonomy processing device, a collision avoidance module that autonomously detects a potential collision situation (PCS) in real-time during motion of the robotic arm based on telemetry received from one or more sensors on or in an environment of the robotic arm, wherein the collision avoidance module includes a set of preconfigured collision models including collision models representing the robotic arm, an envelope model that covers the EVA crew member and their possible or likely range of motion on the tip of the robotic arm, and structure of the spacecraft; and executing, by the autonomy processing device, an autonomous sensing of unexpected obstacles (ASUO) module during motion of the robotic arm that autonomously compares image data of a real world volume where the EVA crew member is about to be to the same volume in a modelled world and detects objects sensed in the real world volume that do not exist in the modelled world.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a space robotic system for autonomous support of extravehicular activity (EVA) operations, according to an embodiment;
Figure 2 is a block diagram of the autonomy processing device of Figure 1, according to an embodiment;
Figure 3 is a block diagram of the autonomous EVA support software components of Figure 2, according to an embodiment;
Figure 4 is a block diagram illustrating a collision avoidance process used by the system of Figure 1, according to an embodiment; and
Figure 5 is a flow diagram of an EVA operation performed by the system of Figure 1, according to an embodiment;
Figure 6 is a flow diagram of a method of method 700 of reconfiguring the robotic arm of Figure 1 for an EVA support operation, according to an embodiment; and
Figure 7 is a flow diagram of a method of reconfiguring the robotic arm of Figure 1 for free space motion after an EVA support operation, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods, and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to space robotic systems, and more particularly to space robotics systems for providing autonomous support to extravehicular activity (EVA) operations.

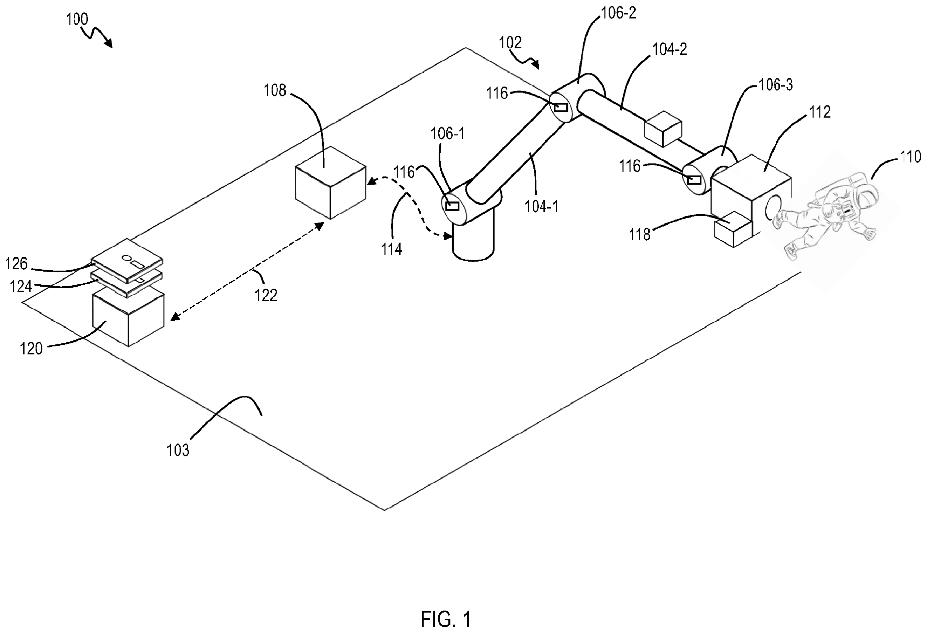

Referring now to Figure 1, shown therein is a system 100 for autonomous support of EVA operations, according to an embodiment. The system 100 is implemented in space and uses a space-based robotic system.

The system 100 is configured to perform one or more types of EVA operations or tasks. EVAs are activities performed by a space-suited crewmember in an unpressurized or space environment.

The system 100 includes a robotic arm 102. The robotic arm 102 may be a serial robotic manipulator. The robotic arm 102 may be a 6-DOF robotic arm. The robotic arm 102 includes a plurality of booms (or links/linkages) and joints for articulating the robotic arm 102. In the example of Figure 1, the robotic arm 102 includes booms 104-1, 104-2 and joints 106-1, 106-2, 106-3.

The robotic arm 102 is on a spacecraft platform 103 (also referred to as a host spacecraft). The spacecraft platform 103 includes structure, which includes effectively all structure, modules, apparatus, tools, and payloads other than the robotic arm 102 and which may present a collision risk with the robotic arm 102 during maneuvering of the robotic arm 102. Structure may include articulating structures, such as deployable or articulated antennas and solar panels.

The robotic arm 102 is configured to perform one or more autonomous tasks (referred to simply as "tasks") based on instruction from an arm controller 108. Each task is composed of a sequence of robotic actions. In some cases, a task may be composed of only a single action. An example may be a motion type action.

The system 100 is configured to perform an EVA support task with the robotic arm 102. The EVA support task may include positioning, orienting, translating and/or maneuvering a crew member 110 on the free end of the robotic arm 102 to and from a worksite (not shown). Once at the worksite, the crew member 110 can perform some operation or task manually, such as a payload installation or equipment repair and maintenance.

The EVA support task performed by the robotic arm 102 may include a series or partially ordered sequence of actions.

The robotic arm 102 includes an end effector 112 coupled to a free end of the robotic arm 102. The robotic arm 102 manipulates, moves, and positions the end effector 112. The end effector 112 may be an end effector that can be coupled and decoupled from the end of the robotic arm 102 (i.e., picked up and removed).

The system 100 includes a robotic arm controller 108. The arm controller 108 executes control software for controlling movement of the robotic arm 102 (e.g., by controlling joint rate and position of the arm joints). The arm controller 108 may implement a functional layer of the autonomous system including function level control software components. Arm controller 108 may be implemented at a single device or across a plurality of devices. For example, arm controller 108 may be implemented partially at a control device local to the robotic arm 102 and partially at an executive control device configured to determine, plan, and schedule robotic operations. Generally, the arm controller 108 controls movement (e.g., rotation) of the arm joints, thereby enabling controlled movement of the robotic arm 102 and ultimately of the end effector 108 (and the crew member 110). The robotic arm 102 and arm controller 108 are communicatively connected and the connection is represented as a hashed line 114 between the arm 102 and arm controller 108. Arm controller 108 may include computing components (e.g., processors, data storage) and other control hardware.

In an embodiment, the arm controller 108 may include manipulator control software, vision software, and end effector control software. The manipulator control software, when executed by a processor of the arm controller 108, controls articulation and movement of the arm 102, such as through controlling the articulation of joints. The manipulator control software may receive sensor data from sensors in or on the arm 102 (e.g., sensors 116) and other input data, process the input data, and generate control instructions based on the processing and send the control instructions to the arm 102 for execution. The vision software, when executed by a processor of the arm controller 108, processes image data acquired by vision components of the system 100, such as cameras (e.g., camera 130). Processing may include, for example, processing image data of a machine vision marker on a payload or other object or structure or determining a pose of the marker (e.g., via executing a pose estimation algorithm). The end effector control software, when executed, controls the operation of the end effector 112.

The system 100 includes a plurality of sensors disposed on and in the environment of the robotic arm 102 for acquiring telemetry data and visual imagery data about the execution or robotic tasks by the robotic arm 102. This includes sensors, such as joint sensors 116 and camera system 118, that are coupled to robotic arm 102 (also referred to as "arm sensors") and sensors that are not coupled to the robotic arm 102. The sensors may be of multiple sensor types. Example sensors include actuator control units, camera controllers, motor controllers, and arm controllers. Example sensor data that may be collected includes temperature, voltage, current, force, video, and lidar data. It will be understood that the type and positioning of sensors may vary in different implementations of system 100. The sensors feed sensor data (telemetry, imagery) to the arm controller 108 and the autonomy processing device 120.

The sensors include at least one imaging system, such as imaging system 118, for imaging an environment that the robotic arm 102 is in. The imaging system 118 is configured to produce a two-dimensional or three-dimensional image. The imaging system 118 may be a camera system. In variations, the imaging system 118 may be, for example, any one or more of a stereo camera, lidar, THz imaging, microbolometer thermal imaging, event imaging, distributed or heterodyned range sensing, or millimeter wave (mmw) radar.

The imaging system provides image data to one of or both the arm controller 108 and the autonomy processing device 120 (described further below) that allows the robotic arm 102 to be positioned in the environment (e.g., positioning end effector 112 relative to a worksite). The imaging system 118 also records video data during the performance of the robotic operation by the robotic arm 102. It will be understood that multiple imaging systems may be present at different locations (on the robotic arm 102 or independent therefrom) and record images or video of various aspects of the robotic operations.

The system 100 includes an autonomy processing device 120. The autonomy processing device 120 may also be referred to as an executive robotic control processor. The autonomy processing device 120 is configured to execute encoded process-executable instructions for monitoring and controlling performance of autonomous operations by the robotic arm 102, including EVA support operations.

The autonomy processing device 120 is in communication with arm controller 108 via communication link 122. The autonomy processing device 120 may process data received from arm controller 108.

The autonomy processing device 120 includes one or more processors for executing software components (or modules) and one or more data storage devices (e.g., memory) for storing data.

The autonomy processing device 120 includes a collision avoidance software component 124 and an autonomous sensing of unexpected obstacles (ASUO) software component 126. The autonomy processing device 120 executes the collision avoidance and ASUO software components 124, 126 during performance of the EVA support operation by the robotic arm 102.

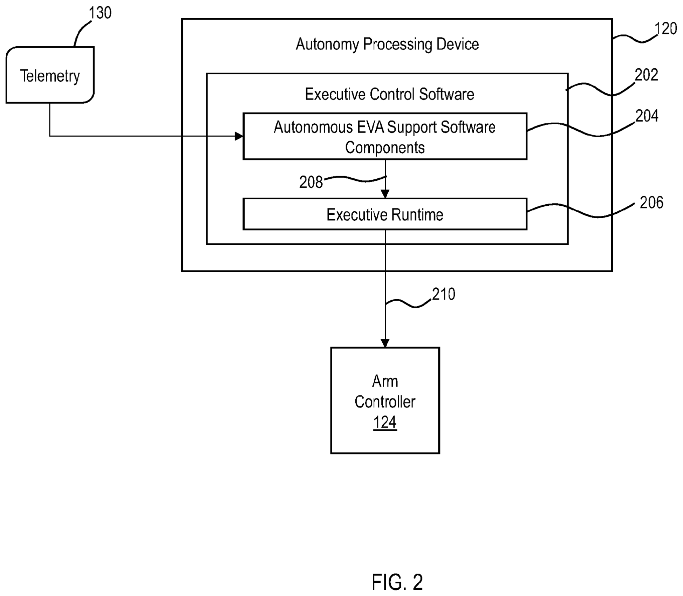

Referring now to Figure 2, shown therein is the autonomy processing device 120 of Figure 1 in further detail, according to an embodiment.

The autonomy processing device 120 executes executive control software 202. The executive control software 202 includes autonomous EVA support software components 204 and an executive runtime software component 206.

The autonomy processing device 120 uses the autonomous EVA support software 204 to analyze telemetry and imagery data 212 collected by sensors of system 100 and detect off-nominal events or states (e.g., corresponding to an obstacle, potential collision, misalignment, or fault). Off-nominal event data 208 characterizing a detected off-nominal event during the EVA support operation is provided to the executive runtime 206, which determines a next action of the robotic arm 102 and sends the next action as one or more commands 210 to the arm controller 108 for execution by the robotic arm 102. The responses encoded in the executive runtime 206 may emphasize bringing the system 100 to a safe state and back on track. Responses to off-nominal events may be pre-established and encoded in scripts such that recovery actions are pre-planned to execute automatically upon detection of the off-nominal event.

In some embodiments, the executive runtime 206 is configured to operate in a mixed-initiative mode. In mixed-initiative mode, the executive runtime 206 runs autonomously up to a point (e.g., to a high hover position over the worksite) and then pauses so that the IVA crew can issue manual commands. When manual commanding is done and the EVA is ready to go to the next worksite, the executive runtime 206 resumes autonomy.

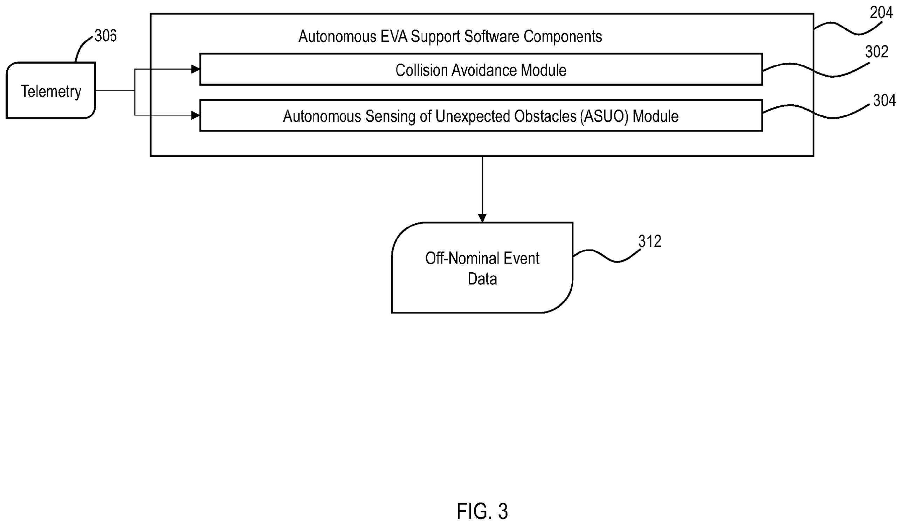

Referring now to Figure 3, shown therein are the autonomous EVA support software components 204 of Figure 2, according to an embodiment.

Autonomous EVA support software components 204 include a collision avoidance module 302 and an autonomous sensing of unexpected obstacles (ASUO) module 304.

The collision avoidance module 302 runs a collision avoidance algorithm. In an embodiment, the collision avoidance algorithm is a model-based collision avoidance algorithm ("MBCA"). The collision avoidance algorithm 302 is configured to detect Potential Collision Situations (PCS) in real-time. The collision avoidance algorithm 302 may be configured to adhere to or otherwise monitor with respect to preconfigured EVA keep-out zone ("KOZ") constraints.

A potential collision situation (PCS) is defined as a situation where there is a credible risk of unintended contact or interaction in the real world unless corrective action is taken. A collision has not yet taken place. An example of an unintended interaction may be entry into a high-gain radiofrequency (RF) keep-out zone, which could itself be moving, but in a knowable or detectable manner (and which may be considered a varying clearance threshold to be monitored for PCS as well as an interaction constraint).

A collision may be defined as the moment of unintended contact between two objects in the real world (e.g., robotic arm 102 or end effector 112 with a payload, structure, or interface).

The desired outcome of the collision avoidance module 302 is safety assurance during movement of the robotic arm 102. The collision avoidance module 302 runs as the robotic arm 102 is in motion.

The collision avoidance module 302 performs collision detection by comparing current robotic arm 102 location and orientation (from device telemetry 212) with a known and up-to-date model of the environment. The collision avoidance module 302 may check a planned path of the robotic arm 102 in the EVA support task (e.g., moving crew member 110 from location A to location B) for potential collisions with both self and the environment using known 3D geometry of the environment (e.g., of the host spacecraft). The collision avoidance module 302 may also use telemetry data on equipment states such as the current (i.e., real time) pose of articulated structures (e.g., solar arrays or antennas on host spacecraft). The collision avoidance module 302 outputs a go or no-go decision to continue with the maneuver.

The collision avoidance module 302 uses real-time telemetry 212, computes forward kinematics on 3D models of the robotic device 102 and the environment, and then checks the clearance between the models to ensure adequate clearance is maintained. If the clearance falls below a clearance threshold, the robotic arm 102 is commanded to stop (e.g., by sending a stop motion command to the arm controller 108) and a PCS is flagged (PCS flag). The flagged PCS in considered off-nominal event data (e.g., 208) and is sent to the executive runtime 206.

In an embodiment, the collision avoidance module 302 uses collision capsules as the primitive representation of the 3D models. In another embodiment, a precomputed voxel map is created which represents the static structures, and spheres are used as primitives for all moving or relocatable bodies in the environment. In another embodiment, a combination of voxel, spheres, and collision capsules are used where collision capsules are used for self-collisions and spheres and the voxel map are used to monitor all other types of collisions.

The collision avoidance module 302 may use a "recovery" threshold which is smaller than a "trigger threshold" to allow the robotic arm 102 to move back into safe space without completely disabling the collision avoidance module 302. This avoids a situation where the robotic arm 102 can enter a potential collision situation (PCS) but never leave. The recovery threshold may be chosen to be at a distance where the autonomy is no longer trusted to move the arm without operator supervision. In an embodiment, the collision avoidance module 302 may implement one or more of the techniques described in US Patent Application Number 18/799,009, which is hereby incorporated by reference in its entirety.

The ASUO module 304 is configured to identify discrepancies between a modelled world and the real world. "Real world' may be defined as the world as it actually exists in the present moment during an operation. Sensors (e.g., imaging system 118) are used to take measurements from the real world, which can then be used to estimate underlying states and to inform decision making. The real world includes the presence of a human being (EVA crew) and any equipment or tools carried by the human being. "Modelled world" may be defined as the world as it is represented digitally. The modelled world represents information that was known and verified at a particular point in time before the start of an operation. The modelled world includes generic "envelope" models that cover the human being (EVA crew) and their possible or likely ranges of motion. In an embodiment, the ASUO module 304 uses lidar to scan the environment. The ASUO module 304 compares the scanned environment against a 3D model of the expected environment. If unexpected lidar returns exist, or if no lidar returns are detected where something should exist, the ASUO module 304 raises an error, caution, or warning (off-nominal event data 208). The ASUO module 304 scans the volume where the human (EVA crew 110) is about to be to make sure that volume is safe for the EVA crew 110 to enter. The ASUO module 304 may detect, through comparison of the real world to the modelled world, objects that are sensed in the real world but that do not exist in the modelled world (e.g., equipment left behind on a previous EVA, human errors in the configuration of the modelled world) or unexpected changes to modelled objects (e.g., antenna bent or broken, grapple fixture bent or broken, loose thermal blankets, loose cable harnesses).

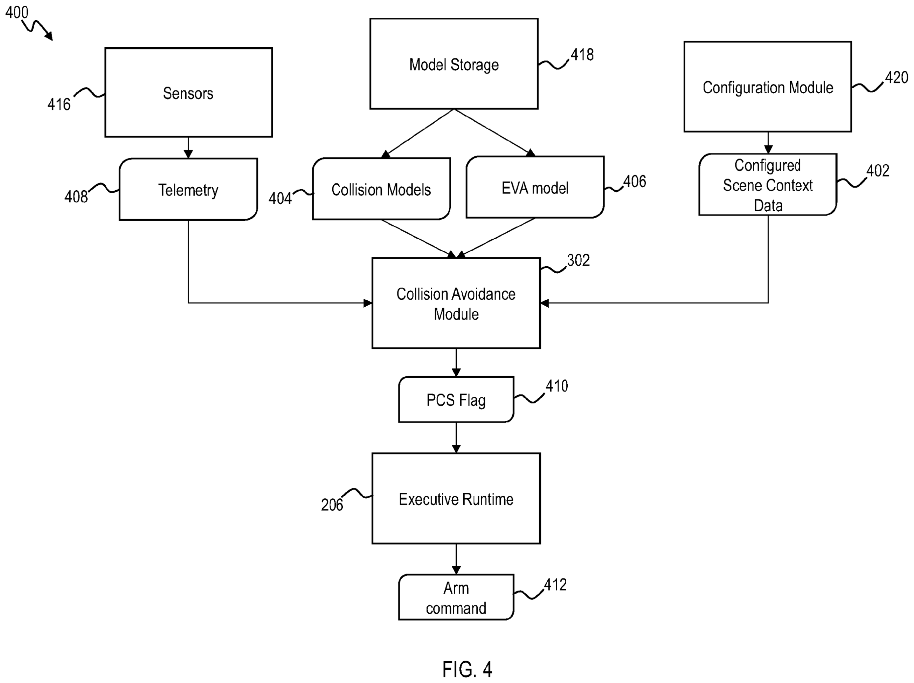

Referring now to Figure 4, shown therein is an autonomous collision avoidance operation 400 implemented by the system 100 of Figure 1 using the collision avoidance module 302, according to an embodiment. The operation 400 may be implemented on the autonomy processing device 120 (or some combination of the autonomy processing device 120 and the arm controller 108).

The collision avoidance operation 400 is performed during execution of an EVA support task by robotic arm 102.

Using the input configuration information 402 (via configuration module 420), collision models 404 for each element present in the scene, and an EVA model 406 (stored in model storage 418) representing the EVA crew member 106, the collision avoidance module 302 places the collision models 404 in the appropriate location in space and determines which collision checks should be performed. The EVA model 406 may include an approximately human-sized volume (e.g., cylinder, sphere) on the end of the end effector 112 to represent the crew member 106 as payload. The EVA model 406 may include a human model that is a bounding envelope instead of specific geometry. To perform collision checks, the collision avoidance module 302 takes as input telemetry 408 (e.g., telemetry 212, collected by sensors 416), and updates the locations of the robotic representation of models. The telemetry 408 may include joint angles (of robotic arm 102) and articulated structure angles (of articulated structures on the spacecraft). A potential collision situation (PCS) occurs when the collision model 404 of the robotic arm 102 comes within a clearance threshold of other bodies' collision models 404 in the scene.

Prior to use, the collision avoidance module 302 is initialized for EVA support operations. This may include loading the models, configuring the world (including the crew 110 bounding envelope (or "bubble") on the end of the arm 102), and setting threshold parameters.

When the collision avoidance module 302 outputs a PCS flag 410 when a PCS is detected. The PCS flag is output to the executive runtime 206. In response to the received PCS flag 410, the executive runtime 206 outputs commands for performing a contingency failed EVA support operation. This may include executing a script for a contingency operation in the event of a collision during EVA support operations. The executive runtime 206 determines and outputs an arm command 412, which is sent to the arm controller 108. The command 412 may be a command to arrest motion. The executive runtime 206 may raise a caution or warning indication to the crew (with the crew trained on how to respond to the caution or warning).

The configuration information includes topology information (e.g., what payloads are located where, what spacecraft 103 elements are located where, what visiting vehicles are docked to which port, etc.). The configuration information includes pose information (e.g., joint angles of robotic arms, joint angles of articulated structures like solar arrays and antennas).

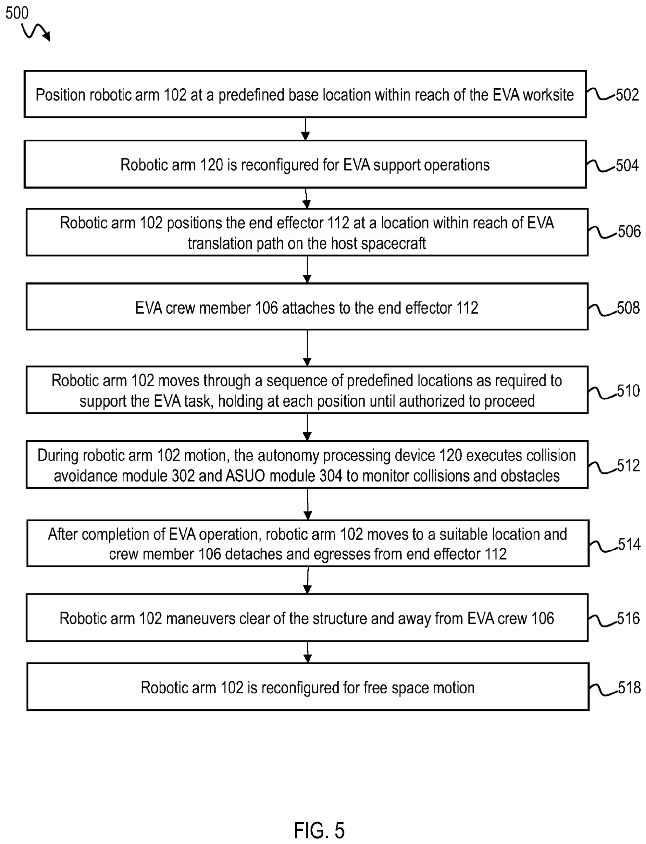

Referring now to Figure 5, shown therein is an EVA support operation 500 performed using the system 100 of Figure 1, according to an embodiment.

At 502, the robotic arm 102 is positioned at a predefined base location that is within reach of the EVA worksite. This may include relocating the robotic arm 102 and any dedicated tools required to support the EVA operation.

At 504, the robotic arm 102 is reconfigured for EVA support operations.

At 506, the robotic arm 102 moves to position the end effector 112 at a location within reach of the EVA translation path on the host spacecraft.

At 508, the EVA crew member 106 ingresses and attaches to the end effector 112. This may include installing a foot restraint and attaching a personal safety tether.

At 510, the robotic arm 102 moves through a sequence of waypoints (predefined locations) as required by the EVA support task. The waypoints include at least one waypoint corresponding to an EVA worksite (i.e., the location at which the EVA crew 110 will perform the support operation). In some cases, such as where an EVA support operation includes multiple steps to be performed by the EVA crew 110 at different locations around the worksite, the waypoints may include a waypoint for each specific step.

At 512, during robotic arm 102 motion, the autonomy processing device 120 executes collision avoidance module 302 and the ASUO module 304 to monitor potential collisions and obstacles.

At 514, after completion of the EVA operation by the crew member 106, the robotic arm 102 moves to a suitable location and crew member 106 egresses and detaches from the end effector 112.

At 516, the robotic arm 102 maneuvers clear of the structure and away from EVA crew 106. Structure includes all elements in the environment or scene other than the robotic arm 102 and the EVA crew 100.

At 518, the robotic arm 102 is reconfigured for free space motion. Free space motion may be defined as arm 102 motions outside of proximity (notionally in the volume between worksites that are not occupied by host spacecraft structure). Free space motions can occur with higher tip speed because the margin between the arm/payload and structure is larger than in proximity, so longer stopping distances/oscillations can be tolerated.

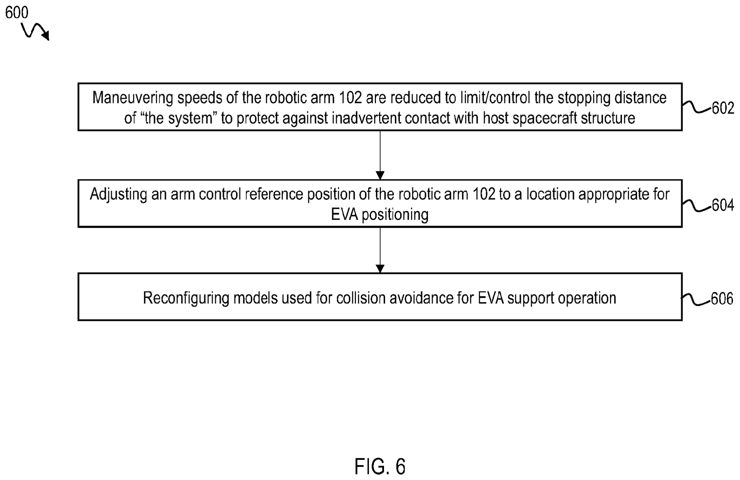

Referring now to Figure 6, shown therein is a method 600 of configuring the robotic arm 102 of Figure 1 for EVA support operations, according to an embodiment. The method 600 corresponds to step 504 of Figure 5.

At 602, maneuvering speeds of the robotic arm 102 are reduced to limit/control the stopping distance of the robotic arm 102 . This protects against inadvertent contact with host spacecraft structure. Speeds are predetermined. Reduced speed is commanded. Reduced speed may be commanded as a command from the task being executed by the executive runtime 120. Reduced speed may be commanded by the IVA crew. The arm controller 108 is responsible for maintaining the arm speeds below the commanded maximum. The reduced speed corresponds to a speed that meets safety requirements for driving the arm 102 with a human 110 on the tip (and thus are reduced from what may be considered safe for other operations).

At 604, an arm control reference position of the robotic arm 102, referred to as a frame of resolution (FOR), is adjusted to a location appropriate for EVA positioning. The location is predefined. This step is implemented since the EVA crew 110 may be requesting over the voice loops (or other function) for small delta commands to help them get within reach of what they need and allow the EVA crew 110 to move and orient with respect to their reach envelope. The FOR is adjusted to be close to where they are doing most of the work (e.g., approximately chest height) or somewhere near where their hands, arms or tools can best address the worksite rather than at the end effector 112 of the arm 102 because otherwise a command to pitch 5 degrees will result in a large linear motion at their working volume. Like the reduced rates at 602, setting the FOR may be scripted in the task executed at the autonomy processing device 120, and then the arm controller 108 executes the math to make sure the arm 102 moves as expected. The FOR location adjustment may also be performed for EVA crew 110 comfort as well as safety.

At 606, models used for collision avoidance by collision avoidance module 302 (e.g., models 404, 406) are reconfigured. The reconfiguration is performed by the autonomy processing device 120. The reconfiguration is performed because thermal and pressure deformations in the real world can change the actual relative pose between the arm 102 tip and the worksite. As such, it may be necessary to move the EVA crew 110 closer to the structure than the collision avoidance module 302 would otherwise allow you to (i.e., the model thinks the EVA crew 110 is in PCS but it is obvious to the EVA crew 110 that they are not). This reconfiguration turns off (disables) a subset of models and leaves on others. In particular, the reconfiguration turns off the crew bubble (e.g., the bounding envelope on the end of the arm 102 modelling the EVA crew 110 and their potential range of motion), the end effector 112, and possibly the payload or interface the crew 110 will be working on but leaves on the rest of the station (i.e., the spacecraft platform 103) and the arm 102 being checked for potential collisions by the collision avoidance module 302. The reconfiguration may be scripted in a script for the EVA support task and performed autonomously upon execution of the script by the autonomy processing device 120.

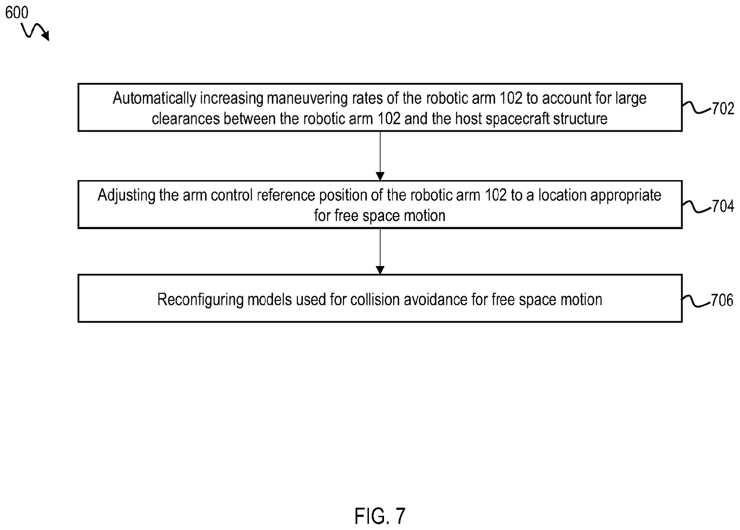

Referring now to Figure 7, shown therein is a method 700 of reconfiguring the robotic arm 102 of Figure 1 for free space motion after an EVA support operation, according to an embodiment. The method 600 corresponds to step 518 of Figure 5.

At 702, maneuvering rates of the robotic arm 102 are automatically increased. This is done to account for large clearances between the robotic arm 102 and the host space structure during free space motion. Speeds are predetermined. Increased speed is commanded. Increased speed may be commanded as a command from the task being executed by the executive runtime 120. Increased speed may be commanded by the IVA crew. The arm controller 108 is responsible for maintaining the arm speeds below the commanded maximum.

At 704, the arm control reference point of the robotic arm 102 (FOR) is adjusted (i.e., from the location at 604) to a location appropriate for free space motion.

At 706, the models used for collision avoidance by the autonomy processing device 120 (collision avoidance module 302) are reconfigured. The reconfiguration is performed by the autonomy processing device 120. The reconfiguration includes turning back on (re-enabling) the subset of models that were disabled at 606. In particular, the autonomy processing device 120 re-enables the models of the crew bubble, the end effector, and anything else that was disabled at 604 to ensure there is no PCS.

While the above description provides examples of one or more apparatus, methods, or systems, it will be appreciated that other apparatus, methods, or systems may be within the scope of the claims as interpreted by one of skill in the art.

## Claims

1. An autonomous robotic system for supporting extravehicular activity ("EVA") on a spacecraft, the system comprising:
a robotic arm for moving an EVA crew member on a tip of the robotic arm to and
from an EVA worksite according to an EVA support task;
an autonomy processing device configured to:
execute a collision avoidance module that autonomously detects a potential collision situation (PCS) in real-time during motion of the robotic arm based on telemetry received from one or more sensors on or in an environment of the robotic arm, wherein the collision avoidance module includes a set of preconfigured collision models including collision models representing the robotic arm, an envelope model that covers the EVA crew member and their possible or likely range of motion on the tip of the robotic arm, and structure of the spacecraft; and
execute an autonomous sensing of unexpected obstacles (ASUO) module during motion of the robotic arm that autonomously compares image data of a real world volume where the EVA crew member is about to be to the same volume in a modelled world and detects objects sensed in the real world volume that do not exist in the modelled world.

2. The system of claim 1, wherein the collision avoidance module executes a model-based collision avoidance algorithm.

3. The system of claim 1, wherein the collision avoidance module:
performs collision detection by comparing a current location and orientation of the robotic arm obtained from telemetry with a known and up-to-date model of the environment; and/or
checks a planned path of the robotic arm in the EVA support task for potential collisions between the robotic arm and itself and between the robotic arm and the environment using known three dimensional geometry of the spacecraft; and/or
computes forward kinematics on three dimensional models (3D) of the robotic arm and the environment, and then checks clearance between the 3D models to ensure adequate clearance is maintained.

4. The system of claim 1, wherein the collision avoidance module uses telemetry on the current pose of an articulated structure on the spacecraft when detecting a potential collision situation between the robotic arm and the articulated structure.

5. The system of claim 4, wherein the articulated structure is an antenna or a solar array.

6. The system of claim 1, wherein the real world volume is the EVA worksite.

7. The system of claim 1, wherein the autonomy processing device is configured to execute an executive runtime that outputs a command to a controller of the robotic arm for performing a contingency operation upon detection of a potential collision situation by the collision avoidance module, and wherein the contingency operation is arresting motion or backing away to a predetermined location.

8. The system of claim 1, wherein the autonomy processing device configures the collision avoidance module prior to execution of the EVA support using topology information of the spacecraft and pose information including pose information of the robotic arm.

9. The system of claim 10, wherein the pose information further includes pose information of one or more articulated structures on the spacecraft.

10. The system of claim 1, wherein the autonomy processing device is configured to autonomously adjust a frame of resolution (FOR) of the robotic arm to a predetermined location for EVA positioning.

11. The system of claim 1, wherein the autonomy processing device reconfigures the set of preconfigured models used by the collision avoidance module for the EVA support task by disabling a predetermined subset of the models.

12. The system of claim 11, wherein the predetermined subset of the models includes a model of the EVA crew member on the tip of the robotic arm.

13. The system of claim 12, wherein the predetermined subset of the models further includes a model of an end effector at the tip of the robotic arm and a model of a payload or interface to be worked on at the EVA worksite.

14. The system of claim 1, wherein the autonomy processing device is configured to autonomously disable and re-enable a predetermined subset of models used by the collision avoidance module during performance of the EVA support task.

15. A method of performing an extravehicular support activity ("EVA") support operation on a spacecraft, the method comprising:
moving, with a robotic arm, an EVA crew member on a tip of the robotic arm to and from an EVA worksite according to an EVA support task;
executing, by an autonomy processing device, a collision avoidance module that autonomously detects a potential collision situation (PCS) in real-time during motion of the robotic arm based on telemetry received from one or more sensors on or in an environment of the robotic arm, wherein the collision avoidance module includes a set of preconfigured collision models including collision models representing the robotic arm, an envelope model that covers the EVA crew member and their possible or likely range of motion on the tip of the robotic arm, and structure of the spacecraft; and
executing, by the autonomy processing device, an autonomous sensing of unexpected obstacles (ASUO) module during motion of the robotic arm that autonomously compares image data of a real world volume where the EVA crew member is about to be to the same volume in a modelled world and detects objects sensed in the real world volume that do not exist in the modelled world.
